(19) Europäisches Patentamt
European Patent Office
Office européen des brevets

(11) **EP 2 000 904 B1**

(12) **FASCICULE DE BREVET EUROPEEN**

(45) Date de publication et mention
de la délivrance du brevet:
**01.08.2012 Bulletin 2012/31**

(51) Int Cl.:
***G06F 7/72*** *(2006.01)*

(21) Numéro de dépôt: **08157661.3**

(22) Date de dépôt: **05.06.2008**

(54) **Procédé de multiplication modulaire de Montgomery masquée**

Maskiertes Verfahren für modulare Multiplikation nach Montgomery

Masked Montgomery modular multiplication method

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **07.06.2007 FR 0704086**

(43) Date de publication de la demande:
**10.12.2008 Bulletin 2008/50**

(73) Titulaire: **THALES**
**92200 Neuilly sur Seine (FR)**

(72) Inventeurs:
• **Sauzet, Alain**
**91070 Bondoufle (FR)**
• **Bernard, Florent**
**77185 Lognes (FR)**

(74) Mandataire: **Lucas, Laurent Jacques**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A- 1 291 763      WO-A-98/51038**
**WO-A-2006/103288    US-A1- 2003 079 139**

**Description**

La présente invention concerne un procédé de multiplication modulaire de Montgomery masquée et le dispositif associé. Elle s'applique notamment à la sécurisation des processeurs dédiés aux calculs cryptographiques.

Un but de la cryptographie est de chiffrer des données sensibles à l'aide d'un élément secret, généralement une clé cryptographique. La valeur de la clé doit être impérativement protégée pour éviter la divulgation des données sensibles. Les algorithmes cryptographiques sont conçus pour que la clé ne puisse pas être retrouvée en pratique. Théoriquement, la recherche de la clé nécessite des moyens de calcul difficilement à la portée d'un gouvernement et un temps de calcul dépassant l'échelle humaine. Néanmoins, certains attaquants ont contourné ces difficultés d'ordre mathématique pour permettre de trouver la valeur de la clé via des mesures physiques. Ainsi, une méthode utilisée est l'attaque par canaux auxiliaires. Il s'agit de mesurer le comportement d'un bloc de calcul cryptographique pendant l'utilisation de la clé. En effet, certaines opérations sont effectuées en fonction de la valeur de la clé. Or, des grandeurs physiques évoluent selon les opérations effectuées par le bloc de calcul et des données mises en jeu lors de ces opérations. Par exemple, la mesure de la consommation électrique d'un circuit, du temps de calcul ou du rayonnement électromagnétique produit par un composant permet de retrouver certaines opérations effectuées ou certaines données manipulées. Une analyse de ces mesures peut donc conduire à trouver la valeur de la clé utilisée.

Afin de protéger les systèmes de sécurité mettant en oeuvre des procédés de cryptographie asymétrique, il est souhaitable de rendre ce type d'attaques au moins aussi difficile à réaliser que les attaques cryptographiques classiques. Des solutions connues permettent de diminuer l'efficacité de ces attaques, sans pouvoir cependant les empêcher. Ces solutions peuvent impliquer des modifications de l'algorithme de calcul et/ou des données manipulées afin que les mesures de grandeurs physiques révèlent le moins d'informations possible sur les opérations réalisées par le bloc de calcul. Plusieurs catégories de méthodes de protection ont été établies.

Une première catégorie concerne l'ajout de blocs de calcul fantôme. Ces blocs particuliers n'interviennent pas dans le calcul mais modifient la consommation électrique et/ou le rayonnement électromagnétique. Ce type de contre-mesures n'est pas totalement efficace car un traitement des mesures permet de supprimer l'influence de ces blocs de calcul fantôme, et ainsi de les ignorer.

Une deuxième catégorie de méthodes de protection permet d'éviter que l'exécution de l'algorithme soit dépendante de la valeur de la clé. Cette méthode s'avère nécessaire mais non suffisante.

Une troisième catégorie introduit une perturbation aléatoire des données. Cette méthode de protection est généralement qualifiée de « masquage ». Il s'agit de manipuler les données n'ayant, *a priori,* aucun rapport avec les données claires ou chiffrées en vue de diminuer la corrélation entre les mesures et les données connues.

La mise en oeuvre de ces méthodes de protection s'accompagne inévitablement de quelques inconvénients. D'une part, elle entraîne une augmentation du temps de calcul et/ou de la taille du code pour les réalisations logicielles, ou de la surface de circuits pour les réalisations matérielles. D'autre part, la mise en oeuvre des algorithmes cryptographiques dans un système de calcul est généralement effectuée par couches. Des blocs de calcul élémentaires sont utilisés par des algorithmes de plus haut niveau, eux-mêmes utilisés pour la mise en oeuvre d'algorithmes cryptographiques. La modification d'un bloc élémentaire peut donc engendrer des comportements inattendus, voire erronés, dans certains algorithmes de plus haut niveau utilisant ce bloc élémentaire modifié. Afin d'éviter ces erreurs, certaines adaptations au niveau des algorithmes et/ou de l'architecture du système de calcul sont parfois nécessaires. L'intégration d'un bloc élémentaire modifié est ainsi rendue complexe, du fait des nombreux impacts sur les couches algorithmiques supérieures.

A titre d'illustration, l'appel au masquage multiplicatif est couramment employé car il semble naturel en matière de cryptographie asymétrique. Classiquement, les calculs sont effectués dans un anneau modulaire de congruence n. Le masquage multiplicatif se traduit, lors de l'exécution d'un algorithme, par la manipulation d'un nombre x' égal à (($x \cdot r$) *modulo n*) au lieu de manipuler le nombre *(x modulo n),* r étant un aléa et n étant le module. Cependant, le masquage multiplicatif comporte plusieurs inconvénients. D'une part, il nécessite une division supplémentaire permettant de retrouver le résultat attendu. Or, l'opération de division est coûteuse en temps de calcul et en ressources matérielles. D'autre part, l'aléa r est fixé pour toute la durée d'exécution d'un l'algorithme, ce qui peut faire émerger une faiblesse exploitable par un attaquant. De plus, lors de l'utilisation par un algorithme de certaines courbes elliptiques, d'autres vulnérabilités peuvent apparaître avec le masquage multiplicatif, notamment lorsque qu'un attaquant choisit un point de coordonnées nulles sur ladite courbe.

Une autre méthode de masquage connue est l'exécution des algorithmes dans un anneau modulaire de congruence *k.n, k* étant un entier naturel. Cependant, l'augmentation de la taille du module utilisé pour les calculs nécessite un dimensionnement plus élevé des ressources logicielles et/ou matérielles mises en oeuvre.

Un autre procédé de masquage a été divulgué dans une demande de brevet européen publiée sous le numéro EP1239364. Il s'agit d'une technique de double multiplication dont une est masquée. Cette solution, tout comme les précédentes, ne s'intègre pas aisément dans un système de calcul existant et multicouches. En effet, elle implique notamment des modifications dans les algorithmes utilisés par les fonctions cryptographiques.

Une des opérations de base utilisée par les algorithmes de cryptographie asymétrique est la multiplication modulaire. Cette opération permettant de calculer un produit modulo n de deux entiers, est utilisée par un grand nombre d'algorithmes. Il est donc souhaitable d'y introduire une protection contre les attaques par canaux auxiliaires. Par ailleurs, une contrainte supplémentaire à satisfaire est la flexibilité de la solution, c'est à dire l'aptitude à traiter des nombres de tailles variables.

Un but de l'invention est la mise en oeuvre, au niveau de l'opération de multiplication modulaire, d'une méthode de protection entraînant un faible surcoût de temps de calcul, requérant très peu de ressources matérielles supplémentaires, et sans impact sur les algorithmes de plus haut niveau. A cet effet, l'invention a pour objet un procédé de multiplication modulaire de Montgomery en congruence n exécuté par un composant cryptographique fonctionnant sur un bus de données de b bits, le procédé recevant deux opérandes d'entrée $A+k_1.n$ et $B+k_2.n$, A et B étant inférieurs à n, $k_1$ et $k_2$ étant des entiers aléatoires, le procédé étant caractérisé en ce qu'il comprend au moins les étapes suivantes :

○ calculer un résultat intermédiaire S égal à $(A+k_1.n).(B+k_2.n).R^{-1}$ mod n, R étant une puissance de la base de numération, R étant supérieur au module n, la base de numération étant égale à $2^b$ le procédé étant caractérisé en ce qu'il comprend au moins les étapes suivantes : ;
  o générer un nombre pseudo-aléatoire z, le nombre pseudo-aléatoire z étant calculé en fonction des opérandes d'entrée $x = A+k_1.n$ et $y = B+k_2.n$ de la multiplication ;
  ○ ajouter au résultat intermédiaire S le produit dudit nombre z par n.

Le procédé selon l'invention peut comporter au moins les étapes suivantes:

○ $S \leftarrow x_0.y$
○ pour i allant de 0 à $t_n-1$, faire :

  a. $m_i \leftarrow S_0.n'$ mod r
  b. $S \leftarrow x_i.y + (m_i.n+S)/r$

○ $mt \leftarrow S_0.n'$ mod r
○ déterminer un nombre pseudo-aléatoire z
○ $S \leftarrow z.n + (m_{tn}.n+S)/r$

où r désigne la base de numération, $t_n$ la taille du module n en nombre de mots-machine, x et y les opérandes à multiplier, $m_i$ des coefficients intermédiaires, S le résultat de la multiplication, et la valeur n' étant égale à $-n^{-1}$ mod r.

Selon un mode de réalisation, la multiplication modulaire est effectuée en base de numération élevée, supérieure ou égale à 4.

Selon un mode de réalisation, le nombre pseudo-aléatoire z est calculé en fonction des opérandes d'entrée $x = A+k_i.n$ et $y = B+k_2.n$ de la multiplication.

Selon un mode de réalisation dans lequel le nombre x est formé par les mots-machine $x_0 x_1 ... x_{tn}$ et le nombre y est formé par les mots-machine $y_0 y_1 ... y_{tn}$, le mot pseudo-aléatoire z est égal à $x_0$ xor $x_1$ xor ... xor $x_{tn}$ xor $y_0$ xor $y_1$ xor ... xor $y_{tn}$, xor désignant l'opération de « ou exclusif » binaire.

D'autres caractéristiques apparaîtront à la lecture de la description détaillée donnée à titre d'exemple et non limitative qui suit faite en regard de dessins annexés qui représentent :

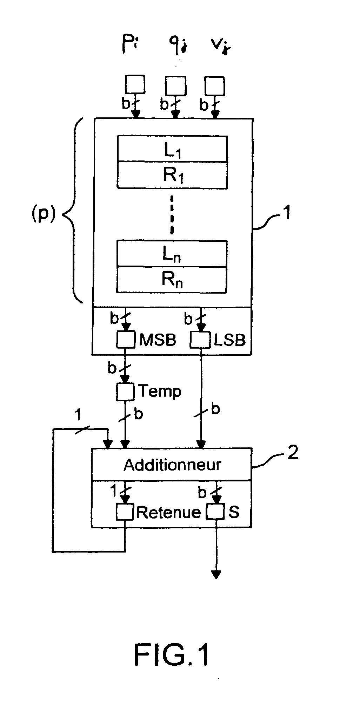

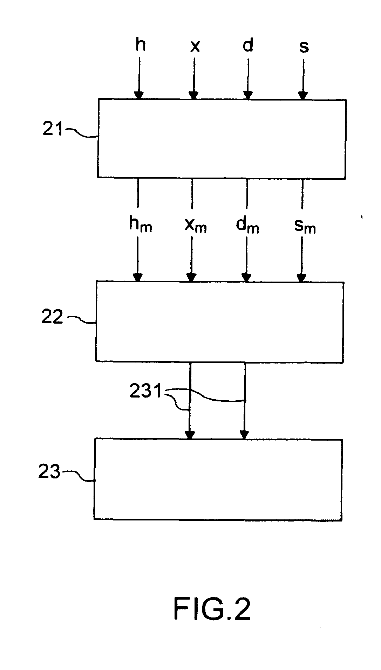

○ la figure 1, un exemple de cellule de multiplication-addition utilisée dans la multiplication modulaire masquée selon l'invention,
○ la figure 2, un synoptique d'utilisation d'un multiplieur mettant en oeuvre le procédé de masquage selon l'invention par un algorithme faisant appel à l'opération de multiplication modulaire.

Le multiplieur selon l'invention est implémenté en matériel sur ASIC (Application-Specific Integrated Circuit) ou FPGA (Field-Programmable Gate Array) et fonctionne sur un bus de données de b bits.

Un nombre de b bits est qualifié par la suite de « mot machine ». La taille de bus est souvent une puissance de 2. La base de numération r est définie comme étant égale à $2^b$. Le module n est un nombre impair enregistré sur $t_n$ mots machine. Enfin, on définit R comme une puissance de la base de numération, R étant supérieur au module n. Un nombre x peut se décomposer dans la base r en t+1 chiffres $x_i$ comme suit :

$$x = x_0 + x_1.r + x_2.r^2 + ... + x_t.r^t,$$

où chaque chiffre $x_i$ est de la taille d'un mot machine.

Le multiplieur selon l'invention, à partir de deux nombres x et y, permet de calculer $x.y.R^1 \bmod n + e.n$, où e est une valeur dépendant de x et y, et comprise entre 0 et r/2. L'opération $x.y.R^1 \bmod n$ est la multiplication modulaire de Montgomery. Le multiplieur effectue donc une multiplication modulaire de Montgomery et un masquage additif du résultat de cette multiplication. Comme la valeur e dépend de x et y, lorsque les valeurs d'entrée x et y sont déjà masquées par une valeur aléatoire avant d'être utilisées par le multiplieur, le résultat est lui aussi masqué par une valeur aléatoire. Le multiplieur permet donc de propager le masquage des données d'entrée.

Selon une variante de réalisation, la valeur e dépend d'une variable aléatoire indépendante de x et de y.

Avant d'effectuer des multiplications, une valeur, notée n', est précalculée : $n' = -n^{-1} \bmod r$. Le résultat de la multiplication est noté S. Les chiffres d'un nombre N dans la base r sont notés $N_i$.

Le calcul de la multiplication modulaire de Montgomery avec masquage additif du résultat est réalisé par le procédé suivant :

    i. $S \leftarrow x_0.y$
    ii. pour i allant de 0 à $t_n$-1, faire :

        a. $m_i \leftarrow -s_0.n' \bmod r$
        b. $S \leftarrow x_i.y + (m_i.n+S)/r$

    iii. $m_{tn} \leftarrow -S_0.n' \bmod r$
    iv. $z \leftarrow x_0 \text{ xor } x_1 \text{ xor } ... \text{ xor } x_{tn} \text{ xor } y_0 \text{ xor } y_1 \text{ xor } ... \text{ xor } y_{tn}$
    v. $S \leftarrow z.n + (m_{tn}.n+S)/r$

où les valeurs $m_i$ sont des coefficients intermédiaires de calcul.

Le rôle de la quatrième étape (iv) est de fournir une valeur pseudo-aléatoire z dépendant de x et de y. Le procédé de calcul de cette valeur pseudo-aléatoire z donné dans l'exemple ci-dessus peut être modifié pour combiner les nombres x et y différemment. La cinquième étape (v) permet d'introduire l'aléa généré à l'étape précédente dans le résultat de la multiplication. Le nombre ajouté (z.n) étant un multiple de n, le résultat modifié est congru au résultat tel qu'il aurait été produit par un procédé classique.

L'étape (ii. b.) $(S \leftarrow x_i.y + (m_i.n+S)/r)$ est la plus coûteuse en temps de calcul. Elle peut être réalisée par l'enchaînement de deux opérations de multiplication-addition,

    ■ la première multiplication-addition étant $S \leftarrow (m_i.n+S)/r$,
    ■ et la seconde multiplication-addition étant $S \leftarrow x_i.y + S$.

Chaque multiplication-addition est effectuée par une boucle, la première multiplication-addition se différenciant de la seconde par une division par r.

Selon un mode de réalisation, la boucle effectuée par la seconde multiplication-addition est la suivante :

    c=0
    Pour j allant de 0 à $t_n$ faire :

        $P \leftarrow p_j q_j + V_j + c$
        $S_j \leftarrow \text{LSB}(P)$
        $c \leftarrow \text{MSB}(P)$

    $s_{n+1} = c$

s désignant le résultat de la multiplication-addition $p_{i.q} + v$, et c une variable de retenue.

Lors de l'étape (ii. b.) de la multiplication modulaire, la valeur $p_i$ est remplacée par $x_i$, la valeur q est remplacée par y et la valeur v est remplacé par S. L'opération de base $P \leftarrow p_i q_j + v_j + c$ est réalisée avec $p_i$, $q_j$, $v_j$, c compris entre 0 et r-1. Le résultat intermédiaire P est donc compris entre 0 et $r^2$-1, et exprimé sur deux chiffres. La notation LSB(P) désigne le chiffre de poids faible, et MSB(P) le chiffre de poids fort du nombre P.

Sur la dernière itération de la boucle (lorsque $j = t_n$), contrairement à une multiplication-addition opérant sur des nombres non masqués, où $q_n$ serait inférieur ou égal à 1, la multiplication-addition mise en oeuvre par le dispositif selon l'invention effectue une opération sur un chiffre $q_n$ compris entre 0 et r/2. Ainsi, la valeur $s_{n+1}$ peut être supérieure à 2.

La première multiplication-addition $S \leftarrow (m_i.n+S)/r$ est effectuée de manière similaire par rapport à la seconde multiplication-addition mais comprend également un décalage du résultat de b bits vers le bit de poids faible. Ce décalage équivaut à une division par r. La multiplication-addition avec décalage est effectuée comme suit :

$$c=0$$

Pour j allant de 0 à $t_n$ faire :

$$P \leftarrow p_i q_j + V_j + c$$
$$S_{j-1} \leftarrow LSB(P)$$
$$c \leftarrow MSB(P)$$

$$s_n = c + v_{n+1}$$

Lors de l'étape (ii. b.) de la multiplication modulaire, la valeur $p_i$ est remplacée par $m_i$, la valeur q est remplacée par n et la valeur v est remplacé par S. Ainsi, pour l'itération $j=t_n$, $n_j=0$ par définition de $t_n$, donc $P \leq 2(r-1)$, ce qui implique $MSB(P) \leq 1$.

La boucle est donc, à un décalage d'indice près, proche de la boucle correspondant à la seconde multiplication-addition, ce qui permet d'envisager la réalisation d'un composant capable d'effectuer les deux boucles. Un multiplieur peut notamment scinder l'opération $p_i q_j + v_j + c$ en $(p_i q_j + v_j) + c$, en pipelinant l'opération de multiplication-addition $(p_i q_j + v_j)$ et en ajoutant, à mesure que les résultats sont obtenus, la variable c.

La figure 1 est un exemple de cellule de multiplication-addition utilisée dans la multiplication modulaire masquée selon l'invention. La cellule permet de calculer les deux opérations de multiplication-addition décrites plus haut. Elle est pipelinée pour améliorer ses performances. Le pipeline consiste à rajouter des barrières de registres entre les phases logiques afin de réduire le chemin critique, et ainsi d'augmenter la fréquence maximale de fonctionnement (théoriquement celle d'un additionneur en base r).

On définit la profondeur de pipeline d'un composant élémentaire par son nombre de registres internes. On ne compte pas le registre de sortie.

L'exemple donné à la figure 1 suppose que l'on dispose d'un multiplieur-additionneur 1 pipeliné, de profondeur p.

Il comporte notamment un ensemble de couples logique-registre (li, ri). Le nombre p de ces couples est notamment choisi pour que la fréquence maximale F1 max du multiplieur-additionneur pipeliné soit supérieure ou égale à la fréquence maximale F2max de l'additionneur, les valeurs de ces deux fréquences étant les plus proches possibles.

La fréquence maximale de fonctionnement du multiplieur-additionneur est donnée par l'inverse du temps d'exécution de l'opération de multiplication-addition, alors que la fréquence maximale de fonctionnement du multiplieur-additionneur pipeliné est donné par l'inverse du temps d'exécution d'un seul des p étages. Pour un fonctionnement optimal, on détermine la fréquence maximale de l'additionneur, ce qui donne le temps d'exécution de l'additionneur et on découpe le multiplieur-additionneur en p étages de temps de traversée inférieur ou égal, mais le plus proche possible, au temps d'exécution de l'additionneur.

Les entrées du multiplieur-additionneur 1 correspondent à trois chiffres : $p_i$, $q_j$ et $v_j$ et la sortie est un couple de chiffres correspondant à $LSB(p_i q_j + v_j)$ et $MSB(p_i q_j + v_j)$. La sortie tient sur deux chiffres.

Les résultats du multiplieur-additionneur sont transmis à un additionneur trois entrées, référencé 2 : chiffre+chiffre+carry → chiffre+carry, fonctionnant en 1 cycle (pipeline 0) à la fréquence F2max.

Le registre Temp correspond au stockage de c nécessaire au calcul suivant : addition de c avec le LSB suivant et la retenue précédente.

Les données (chiffres de pxQ +V) sortent donc en série à chaque cycle, chiffre de poids faible en tête, dans le même sens que la propagation de la retenue.

L'opération $s_n = c + v_{n+1}$ peut être effectuée par un additionneur, non représenté sur la figure, additionneur sur b-1 bits + 1 bit = b bits et non pas 2 bits +1 bits = 3 bits, comme dans un dispositif classique, puisque $v_{n+1}$ peut être supérieur à 2.

Les autres étapes du procédé de multiplication modulaire de Montgomery avec masquage additif du résultat peuvent être effectuées en utilisant des multiplexeurs et registres classiques. Un multiplieur permettant d'effectuer une multiplication modulaire selon la méthode de Montgomery est décrit dans la demande de brevet publiée sous le numéro WO2006103288.

Les étapes du procédé de masquage selon l'invention peuvent être aisément mises en oeuvre dans un dispositif comportant une cellule de multiplication-addition tel que décrit plus haut. La génération du nombre pseudo-aléatoire z peut être réalisée par un composant logique à deux entrées et une sortie, la première entrée permettant de recevoir la première opérande x à multiplier, la seconde entrée permettant de recevoir la seconde opérande y à multiplier, et la sortie produisant une combinaison de x et y, par exemple, un nombre égal à x xor y, la notation xor désignant l'opération de OU exclusif binaire. Le nombre pseudo-aléatoire z issu de ce composant logique peut alors être combiné avec n dans un multiplieur pour fournir un multiple pseuso-aléatoire de n, égal à z.n.

La figure 2 est un synoptique d'utilisation d'un multiplieur mettant en oeuvre le procédé de masquage selon l'invention par un algorithme faisant appel à l'opération de multiplication modulaire. Au cours de l'exécution de l'algorithme, toutes les multiplications effectuées opèrent sur des nombres, tous obtenus à partir de quelques valeurs initiales fixées. A titre d'exemple, quatre valeurs initiales notées h, x, d, et s sont utilisées pour générer toutes les autres valeurs utilisées dans les algorithmes.

Lors d'une première étape 21, un masquage additif est opéré sur ces valeurs initiales h, x, d, et s. Ainsi, des valeurs masquées $h_m$, $x_m$, $d_m$, et $s_m$ sont obtenues comme suit :

$$h_m = h + e_h.n \quad ; \quad x_m = e_x.n \quad ; \quad d_m = e_d.n \quad ; \quad s_m = e_s.n \quad ;$$

où $e_h$, $e_x$, $e_d$, $e_s$, sont des valeurs aléatoires comprises entre 0 et $2^P$. En pratique, la valeur p est de préférence au moins égale à 63 pour que le masquage additif soit efficace.

Lors d'une deuxième étape 22, l'algorithme est exécuté en faisant appel, autant de fois que nécessaire, au multiplieur selon l'invention. Aucune modification de l'algorithme n'est requise, et tous les résultats produits par le multiplieur selon l'invention sont masqués, ce qui permet à l'algorithme de ne manipuler que des données masquées.

Lors d'une troisième étape 23, après l'exécution de l'algorithme, une opération de « démasquage » est appliquée sur les valeurs masquées 231 pour retrouver les résultats qui auraient été obtenus sans masquage. Cette opération peut, par exemple, être réalisée par le multiplieur selon l'invention en choisissant des valeurs d'entrée particulières.

L'utilisation du dispositif illustrée en figure 2 montre que les valeurs utilisées dans les calculs sont décorrélées des valeurs initiales. Par conséquent, un attaquant analysant des grandeurs physiques pendant l'exécution de l'algorithme ne peut donc plus, en choisissant judicieusement les variables d'entrée, retrouver les données secrètes utilisées pendant le calcul. Par exemple, sur un dispositif classique, un attaquant peut choisir une variable d'entrée comportant un grand nombre de '0' ou un grand nombre de '1', puis analyser la consommation électrique pour déterminer une relation entre les variables d'entrée et la consommation et/ou déduire le type d'opérations effectuées par l'algorithme. Grâce à l'utilisation du masquage additif, ces longues chaînes initiales de '0' ou de '1' sont éliminées dans les opérandes utilisés par l'algorithme, affaiblissant ainsi les hypothèses que l'attaquant a pu faire vis à vis des variables d'entrées qu'il a lui-même choisi.

Le surcoût en temps de calcul et, dans le cas d'une intégration matérielle, en surface de circuit, est très faible.

Avantageusement, le bloc multiplieur permet d'exécuter les algorithmes sur des nombres de taille quelconque sans modifier l'implémentation matérielle. Ainsi, un multiplieur synthétisé en FPGA ou ASIC et réalisé selon l'invention permet d'exécuter des multiplications indifféremment sur des modules de taille 128, 256, 512, 1024, et 2048 bits, par exemple.

Un avantage du procédé selon l'invention est qu'il peut être mis en oeuvre dans un composant de calcul cryptographique existant de manière transparente vis à vis de l'architecture du composant. En effet, il suffit de remplacer l'opérateur de calcul de multiplication modulaire classique par un opérateur mettant en oeuvre le procédé selon l'invention. Le remplacement de cette opération élémentaire se traduit alors par une amélioration globale de la protection du composant, puisque les fonctions utilisées par les mécanismes de sécurité tels que le chiffrement ou l'authentification font appel à l'opérateur selon l'invention.

**Revendications**

1. Procédé de multiplication modulaire de Montgomery en congruence n exécuté par un composant cryptographique fonctionnant sur un bus de données de b bits, le procédé recevant deux opérandes d'entrée $A+k_1.n$ et $B+k_2.n$, A et B étant inférieurs à n, $k_1$ et $k_2$ étant des entiers aléatoires, ledit procédé calculant un résultat intermédiaire S égal à $(A+k_1.n).(B+k_2.n).R^{-1}$ mod n, R étant une puissance de la base de numération, R étant supérieur au module n, la base de numération étant égale à $2^b$ le procédé étant **caractérisé en ce qu'**il comprend au moins les étapes suivantes :

   o générer un nombre pseudo-aléatoire z, le nombre pseudo-aléatoire z étant calculé en fonction des opérandes d'entrée $x = A+k_1.n$ et $y = B+k_2.n$ de la multiplication ;
   o ajouter au résultat intermédiaire S le produit dudit nombre z par n.

2. Procédé selon la revendication 1, **caractérisé en ce qu'**il comporte au moins les étapes suivantes :

   i. $S \leftarrow -x_0.y$
   ii. pour i allant de 0 à $t_n-1$, faire :

a. $m_i \leftarrow S_0.n'$ mod r
b. $S \leftarrow x_i.y + (m_i.n+S)/r$

iii. $m_{tn} \leftarrow S_0.n'$ mod r
iv. déterminer un nombre pseudo-aléatoire z
v. $S \leftarrow z.n + (m_{tn}.n+S)/r$

où r désigne la base de numération, $t_n$ la taille du module n en nombre de mots-machine, x et y les opérandes à multiplier, $m_i$ des coefficients intermédiaires, S le résultat de la multiplication, et la valeur n' étant égale à $-n^{-1}$ mod r.

3. Procédé selon la revendication 2, **caractérisé en ce que** la multiplication modulaire est effectuée en base de numération élevée, supérieure ou égale à 4.

4. Procédé selon la revendication 1, le nombre x étant formé par les mots-machine $x_0$ $x_1$ ... $x_{tn}$, et le nombre y étant formé par les mots-machine $y_0$ $y_1$ ... $y_{tn}$, **caractérisé en ce que** le mot pseudo-aléatoire z est égal à $x_0$ xor $x_1$ xor ... xor $x_{tn}$ xor $y_0$ xor $y_1$ xor ... xor $y_{tn}$.

**Claims**

1. A method for Montgomery modular multiplications with a congruence n executed by a cryptographic component operating on a data us of b bits, said method receiving two input operands $A+k_1.n$ and $B+k_2.n$, A and B being less than n, $k_1$ and $k_2$ being random integers, said method calculating an intermediate result S that is equal to $(A+k_1.n).(B+k_2.n).R^{-1}$ mod n, wherein R is a power of the numeration base, R being greater than the module n, the numeration base being equal to $2^b$, the method being **characterised in that** it comprises at least the following steps:

○ generating a pseudo-random number z, said pseudo-random number z being calculated as a function of the input operands $x = A+k_1.n$ and $y = B+k_2.n$ of the multiplication;
○ adding to the intermediate result the product of said number z multi lied by n.

2. The method according to claim 1, **characterised in that** it comprises at least the following steps:

i. $S \leftarrow x_0.y$
ii. carrying out the following for i ranging from 0 to $t_n$-1:

a. $mi \leftarrow S_0.n'$ mod r
b. $S \leftarrow x_i.y + (m_i.n+S)/r$

iii. $m_{tn} \leftarrow S_0.n'$ mod r
iv. determining a pseudo-random number z
v. $S \leftarrow z.n + (m_{tn}.n+S)r$

wherein r designates the numeration base, $t_n$ the size of the module n in number of machine-words, x and y the operands to be multiplied, $m_i$ intermediate coefficients, S the result of the multiplication, an wherein the value n' is equal to $-n^{-1}$ mod r.

3. The method according to claim 2, **characterised in that** the modular multiplication, is performer on a high numeration base that is than or equal to 4.

4. The method according to claim 1, the number x being formed by the machine-words $x_0$, $x_1$ ... $x_{tn}$ and the number y being formed by the machine-words $y_0$, $y_1$ ... $y_{tn}$, **characterised in that** the pseudo-random word z is equal to $x_0$ xor $x_1$ xor... xor $x_{tn}$ xor $y_0$ xor $y_1$ xor ... xor $y_{tn}$.

**Patentansprüche**

1. Verfahren für eine modulare Montgomery-Multiplikation mit Kongruenz n, ausgeführt von einer auf eine Datenbus von b Bits arbeitenden kryptografischen Komponente, wobei in dem Verfahren zwei Eingangsoperanden $A+k_1.n$

und B+$k_2$.n empfangen werden, wobei A und B kleiner als n sind, wobei $k_1$ und $k_2$ zufällige ganze Zahlen sind, wobei in dem Verfahren ein Zwischenergebnis S von (A+$k_1$.n).(B+$k_2$.n).$R^{-1}$ mod n berechnet wird, wobei R eine Potenz der Numerierungsbasis ist, wobei R größer als Modul n ist, wobei die Numerierungsbasis gleich $2^b$ ist, wobei das Verfahren **dadurch gekennzeichnet ist, dass** es wenigstens die folgenden Schritte beinhaltet:

○ Erzeugen einer pseudozufälligen Zahl z, wobei die pseudozufällige Zahl z in Abhängigkeit von den Eingangsoperanden x = A+$k_1$.n und y = +$k_2$.n der Multiplikation berechnet wird;
○ Addieren des Multiplikationsprodukts aus den Zahlen z und n zu dem Zwischenergebnis.

2. Verfahren nach Anspruch 1, **dadurch gekennzeichnet, dass** es wenigstens die folgenden Schritte beinhaltet:

i. S ← $X_{0.y}$
ii. Durchführen für i im Bereich von 0 bis $t_n$-1:

a. mi ← $S_0$.n' mod r
b. S ← $x_i$.y + ($m_i$.n+S)/r

iii. $m_{tn}$ ← $S_0$.n' mode r
iv. Ermitteln einer pseudozufälligen Zahl z
v. S ← z.n + ($m_{tn}$.n+S)r

wobei r die Numerierungsbasis bezeichnet, $t_n$ die Größe von Modul n in Anzahl Maschinenwörter ist, x und y die zu multiplizierenden Operanden sind, $m_i$ Zwischenkoeffizienten sind, S das der Multiplikation ist und der Wert n' gleich -$n^{-1}$ mod r ist.

3. Verfahren anspruch 2, **dadurch gekennzeichnet, dass** die modulare Multiplikation an einer hohen Numerierungsbasis von gleich oder größer als 4 erfolgt.

4. Verfahren nach Anspruch 1, wobei die Zahl x von den Maschinenwörtern $x_0$, $x_1$ ... $x_{tn}$ gebildet wird und die Zahl y von den Maschinenwörtern $y_0$, $y_1$...$y_{tn}$ gebildet wird, **dadurch gekennzeichnet, dass** das pseudozufällige Wort z gleich $x_0$ xor $x_1$ xor... xor $x_{tn}$ xor $y_0$ xor $y_1$ xor ... xor $y_{tn}$ ist.

$P_i$     $q_i$     $v_i$

(p) {

| $L_1$ |
| $R_1$ |

⋮

| $L_n$ |
| $R_n$ |

1

b ↓    b ↓

☐ MSB    ☐ LSB

b ↓

☐ Temp

1        ⟋b        ⟋b

Additionneur                    2

1 ↓              b ↓

☐ Retenue   ☐ S

# FIG.1

h    x    d    s

21

$h_m$    $x_m$    $d_m$    $s_m$

22

231

23

# FIG.2

**EP 2 000 904 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1239364 A

- WO 2006103288 A